# EUROPEAN PATENT SPECIFICATION

(11) **EP 2 323 318 B1**
(45) Date of publication and mention of the grant of the patent: **09.03.2016**
(21) Application number: 08876780.1
(22) Date of filing: 24.12.2008
(51) Int. Cl.: H04L 12/70, H04L 29/12, H04L 12/46

(54) **METHOD AND DEVICE FOR PROVIDING SERVICE FOR THE DUPLICATE MAC ADDRESS USERS**
VERFAHREN UND EINRICHTUNG ZUM BEREITSTELLEN VON DIENST FÜR DIE BENUTZER DUPLIZIERTER MAC-ADRESSEN
PROCÉDÉ ET DISPOSITIF DE FOURNITURE DE SERVICE POUR LES UTILISATEURS D'ADRESSE MAC DUPLIQUÉE

(30) Priority: 22.08.2008 CN 200810147183
(43) Date of publication of application: 18.05.2011
(73) Proprietor: ZTE Corporation, Shenzhen, Guangdong 518057 (CN)
(72) Inventor: ZHANG, Hailin, Guangdong 518057 (CN)
(74) Representative: Bongiovanni, Simone
(86) International application number: PCT/CN2008/073704
(87) International publication number: WO 2010/020103

(56) References cited:
- EP-A1- 1 496 669
- CN-A- 101 043 355
- CN-A- 101 207 545
- US-A1- 2007 140 264
- US-A1- 2007 177 597
- US-A1- 2007 218 897
- US-B1- 6 493 340

## Description

### Field of the Invention

The present invention relates to the communication technology field, and in particular to a method and an apparatus for providing service for users with duplicate Media Access Control ("MAC" for short) address.

### Background of the Invention

At present, the core switch portion of the IP kernel design used by the broadband access equipment uses layer 2 Ethernet switch, wherein the core ideology of the layer 2 Ethernet switch is learning and forwarding flow based on MAC address, and the module implementing this function is popularly called bridge; the basic principle is: the bridge makes a forwarding decision based on a target MAC address, carries out MAC address learning for the Ethernet data frame flowing through, reads out source MAC address of the frame passing through the bridge and makes inference. If the frame comes from a certain port, this bridge deems that the location of a user having this MAC address is connected with the above port, and then the information is put into an MAC address table thereof. Currently, the access equipment based on Virtual Local Area Network ("VLAN" for short) usually saves simultaneously the MAC address and VLAN ID information as well as the port information in the MAC address table; when the bridge receives and is to forward a data frame, the MAC address table should be searched according to target MAC address information, or the target MAC address information and the VLAN ID information of this data frame, so as to determine the target port of the user having this MAC address. If the port is found, this data frame will be forwarded from the port found, and if not, this data frame will be processed according to other configurations of the access equipment, for instance, abandonment and other operations will be carried out thereto.

As the MAC address of a lot of existing equipment presently can be manually modified, if the MAC address of the user equipment is modified by a user and the modified MAC address just overlaps the MAC address of a certain other user on the same bridge, and in addition, the two users are assigned into the same VLAN, then the information of the MAC address+VLAN ID in the system maintained MAC address table corresponding to the port will be continuously updated, causing the data packets sent to this MAC address in a reversed direction to be sent to both users above confusingly. Thereby discontinuity will occur to the broadband network having two overlapped MAC addresses and the network may be caused inapplicable to some applications.

US 6493340 relates to a method and a device for automatically detecting a data transmission unit with a duplicated network address, and more particularly to a method and a device for automatically detecting a data transmission unit with a duplicated address on a network under control of link state routing.

EP 1496669 relates to a method for efficiently updating an ARP (Address Resolution Protocol) cache table in an ad hoc network, and more particularly, to a method and system for dynamically updating information registered in the ARP cache tables of other terminals when an IP (Internet Protocol) address of a terminal existing in an ad hoc network changes due to collision with other IP addresses

However, the above mentioned problem still remains unsolved.

### Summary of the Invention

The present invention is mate upon considering the problem of network failure caused by two overlapped MAC addresses. Therefore, the object of the present invention is to provide a method and an apparatus for providing service for users with duplicate MAC address for solving at least one of the above problems.

In order to achieve the object of the present invention, a method for providing service for users with duplicate MAC address is provided according to one aspect of the present invention. Particularly, the precondition of providing the service is an MAC address replacement table is necessarily set in advance. Further, the step of setting the MAC address replacement table in advance specifically includes: setting in advance one MAC address replacement table that belongs to a global attribute of a system switching module and is shared by global ports; possibly, one MAC address replacement table is set in advance for each port.

The method for providing service for users with duplicate MAC address according to the present invention includes:
step A: searching whether a learning entry having an address the same as a source MAC address exists in an MAC address table according to the source MAC address of an Ethernet data frame received from a user port, if yes, implementing step B, otherwise, carrying out normal learning and forwarding, wherein the learning entry comprises: MAC address learning entry or learning entry consisting of the MAC address and Virtual Local Area Network ID;
step B: checking whether a replacement operation is carried out for the source MAC address in the MAC address replacement table, if the replacement operation is not completed, selecting an unused replacement entry in the MAC address replacement table to replace the source MAC address and implementing step C; and if the replacement operation is completed, directly implementing the step C; and
step C: forwarding the Ethernet data frame according to a replacement MAC address in the replacement entry.

The method further includes:
Replacing a target MAC address of one Ethernet data frame with a real MAC address corresponding to the replacement MAC address when the target MAC address carried in the Ethernet data frame in a reversed direction is the replacement MAC address in a used replacement entry in the MAC address replacement table, and forwarding the Ethernet data frame according to the real MAC address after the replacement

The method further includes:
when the data frame associated with a certain used replacement entry in the MAC address replacement table is not transmitted in a certain period of time, aging and deleting the replacement entry

In order to achieve the above object of the present invention, an apparatus providing service for users with duplicate MAC address is further provided according to another aspect of the present invention

The apparatus providing service for users with duplicate MAC address according to the present invention comprises: an MAC address replacement table, an inquiring unit, a replacing unit and a forwarding unit.

Particularly, the MAC address replacement table is configured to provide a replacement entry that is used to replace a source MAC address when the MAC addresses of different users are found to overlap;
the inquiring unit is configured to search whether a learning entry having an address the same as the source MAC address exists in an MAC address learning table according to the source MAC address of an Ethernet data frame received from a user port, if yes, to trigger and search for the replacing unit, otherwise, to carry out normal learning and trigger the forwarding unit;
the replacing unit is configured to check whether a replacement operation is carried out for the source MAC address in the MAC address replacement table, if the replacement operation is not completed, to select an unused replacement entry in the MAC address replacement table to replace the source MAC address and to trigger the forwarding unit; and if the replacement operation is completed, to directly trigger the forwarding unit; and
the forwarding unit is configured to, when triggered by the inquiring unit, forward the Ethernet data frame according to the source MAC address; and, when triggered by the replacing unit, forward the Ethernet data frame according to the replacement MAC address in the replacement entry.

Further, when the target MAC address carried in one Ethernet data frame in the reversed direction is the replacement MAC address in one used entry in the MAC address replacement table, the replacing unit is also configured to replace the target MAC of the Ethernet data frame with a real MAC address corresponding to the replacement MAC address, and then to trigger the forwarding unit and
the forwarding unit forwards the Ethernet data frame according to the real MAC address.

The apparatus further comprises:
an aging unit, when the Ethernet data frame associated with a certain used replacement entry in the MAC address replacement table is not transmitted in a certain period of time, the aging unit being configured to age and delete the replacement entry.

In virtue of at least one of the technical solutions above in the present invention, with the method and apparatus for providing service for users with duplicate MAC address provided in the present invention, the system is capable of normally providing the broadband access service to the users when two or more users have the same MAC address in the same VLAN, thereby improving the quality of service operation.

The other characteristics and advantages of the present invention will be illustrated in the following Description, and partially become obvious in the Description or understood by implementing the invention. The object and other advantages of the present invention can be implemented and obtained from the structures specially indicated in the Description, Claims and accompanying drawings

### Brief Description of the Drawings

Fig. 1 is a schematic view of a flow of a method for providing service for users with duplicate MAC address according to an example of the present invention;
Fig. 2 is a schematic view of a detailed flow of a method for providing service for users with duplicate MAC address according to an example of the present invention;
Fig. 3 is a schematic view of an MAC address table and an MAC address replacement table when the MAC address is not duplicate on a user side in the method for providing service for users with duplicate MAC address according to Example 1 of the examples of the present invention;
Fig. 4 is a schematic view of an MAC address table and an MAC address replacement table when the MAC address is duplicate on a user side in the method for providing service for users with duplicate MAC address according to Example 2 of the examples of the present invention; and
Fig. 5 is a schematic view of a structure of an apparatus for providing service for users with duplicate MAC address according to an example of the present invention.

### Detailed Description of Embodiments

### Function Overview

A method for providing service for users with duplicate MAC address on broadband access equipment is provided in the examples of the present invention upon considering the problem that two or more users have overlapped MAC address possibly confronted when the service is provided to a broadband access user. In the examples of the present invention, whether a learning entry having an address the same as a source MAC address exists in an MAC address table is searched according to the source MAC address of an Ethernet data frame received from a user port, if not, normal learning and forwarding is implemented; otherwise, whether a replacement operation is carried out for the source MAC address in the MAC address replacement table is checked, if the replacement operation is not completed, an unused replacement entry will be selected in the MAC address table to replace the source MAC address, and the Ethernet data frame will be forwarded according to a replacement MAC address in the replacement entry. If the replacement operation is completed, the Ethernet data frame will be forwarded directly according to the replacement MAC address in the replacement entry. With this method, the broadband access service still can be normally provided to the users when two or more users in one VLAN have the same MAC.

Next, the preferred examples of the present invention will be illustrated in detail with reference to the figures, wherein the figures constitute a part of the present application and explain the principle of the present invention together with the examples of the present invention. The examples in the present application and features therein can be combined if they are not conflicted.

### Method Examples

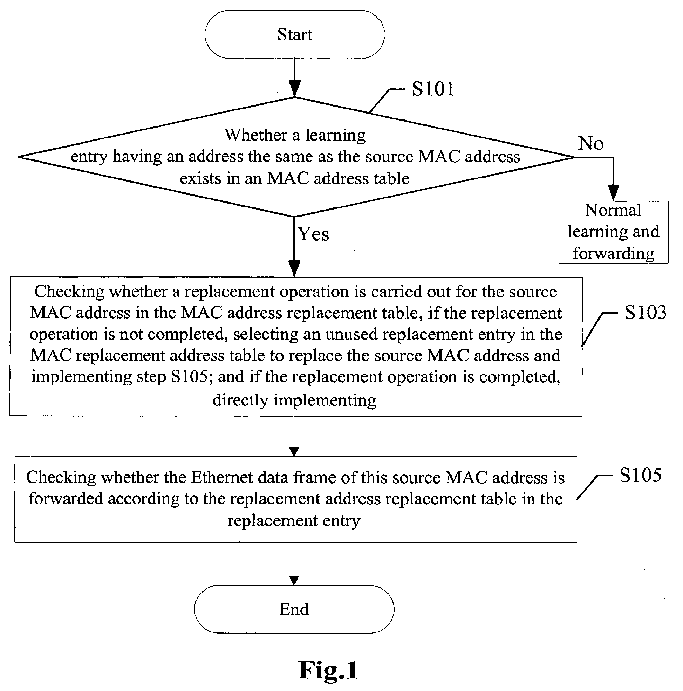

Fig. 1 is a schematic view of a flow of a method for providing service for users with duplicate MAC address according to an example of the present invention. Preferably, one MAC address replacement table is arranged in advance for carrying out a source MAC address replacement operation when the MAC addresses of different users are found to overlap. This MAC address replacement table set in advance can belong to a global attribute of a system switching module and shared by global ports; possibly, one MAC address replacement table can be set in advance for eachport.

As shown in Fig. 1, the method for providing service for users with duplicate MAC address according to the example of the present invention mainly includes the following steps (S101-S105):
step S101: searching whether a learning entry having an address the same as a source MAC address exists in an MAC address table according to the source MAC address of an Ethernet data frame received from a user port, if yes, implementing step S103, otherwise, carrying out normal learning and forwarding; wherein the learning entry comprises: MAC address learning entry or learning entry consisting of the MAC address and Virtual Local Area Network ID,
step S103: checking whether a replacement operation is carried out for the source MAC address in the MAC address replacement table, if the replacement operation is not completed, selecting an unused replacement entry in the MAC address replacement table to replace the source MAC address and implementing step S105 thereafter; and if the replacement operation is completed, directly implementing step S105, and
step S105: forwarding the Ethernet data frame according to the replacement MAC address in the replacement entry.

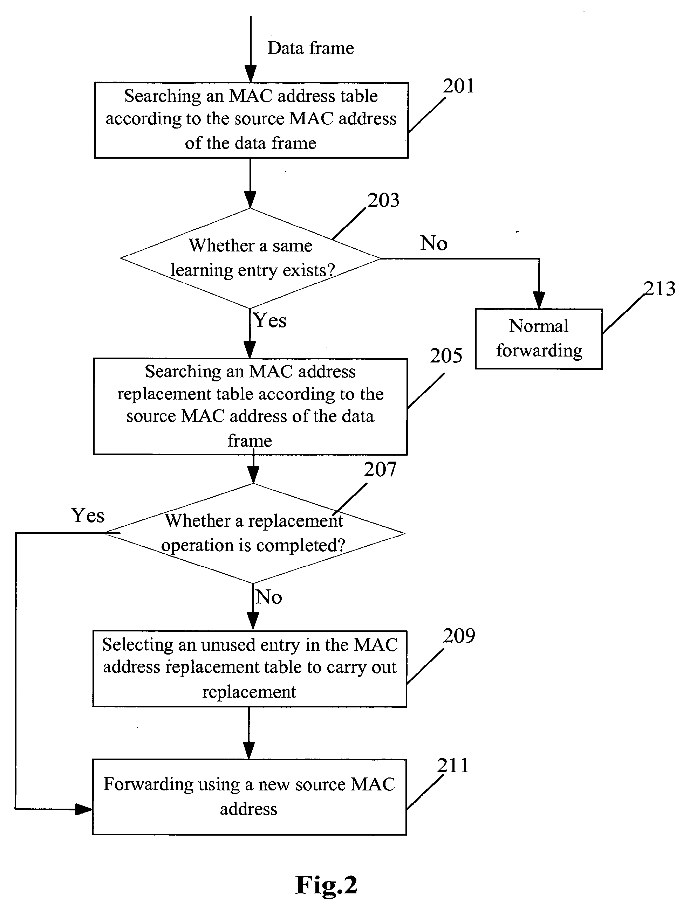

Fig. 2 is a schematic view of a detailed flow of a method for providing service for users with duplicate MAC address according to the example of the present invention. As shown in Fig. 2, the method for providing service for users with duplicate MAC address according to the example of the present invention mainly includes the following steps (S201-S213):
step S201: searching an MAC address table according to a source MAC address of an Ethernet data frame when the Ethernet data frame is received from a user port;
step S203: judging whether an MAC address learning entry, or the MAC address+an VLAN ID learning entry having an address the same as the source MAC address that has been learned on other user ports and not yet aged exists in the MAC address table, if yes, implementing step S205, otherwise, implementing step S213;
step S205: checking an MAC address replacement table when the MAC address table is determined to have the MAC address learning entry or the MAC address+the VLAN ID learning entry of the other user ports duplicating the source MAC address in the newly received Ethernet data frame;
step S207: judging whether a replacement operation is carried out for the source MAC of the Ethernet data frame in the MAC address replacement table, if the replacement operation is not completed, implementing step S209, and if the replacement operation is completed, implementing step S211;
step S209: selecting an unused replacement entry in the MAC address replacement table to replace the source MAC address, recording the source MAC address before replacement, and marking this replacement entry to have been used;
step S211: carrying out a forwarding operation of next step for the Ethernet data frame using the replacement MAC address in this replacement entry as a new source MAC address; and
step S213: when the MAC address table is not found to have the MAC address learning entry of the other user ports or when the MAC address+the VLAN ID learning entry does not duplicate the source MAC address of the newly received data frame, not updating information related to the MAC address table, and just carrying out learning and forwarding according to normal Ethernet bridge forwarding flow

Above mentioned is the process of carrying out the MAC address replacement for the uplink data message. As to the reversed direction, i.e. downlink direction, if the target MAC address carried in one Ethernet data frame is a used replacement entry in the MAC address replacement table, the target MAC address carried in this Ethernet data frame will be replaced with the real MAC address corresponding to the replacement MAC address in the replacement entry, and then the forwarding operation of the next step will be carried out according to the real MAC address.

Moreover, when the Ethernet data frame associated with a certain used replacement entry in the MAC address replacement table is not transmitted in a certain period of time, operation of aging and deleting this replacement entry will be carried out, and the used state is marked to be unused state to prevent the MAC address replacement table from being occupied by replacement entries that are not used.

The present invention will be further illustrated in conjunction with preferred examples to facilitate to understand the invention.

Firstly, an MAC address replacement table should be added in advance to an MAC address learning and forwarding module. The MAC address replacement table can belong to a global attribute of a system switching module, and therefore is shared by global ports. One MAC address replacement table also may be preset for each port for carrying out an MAC address replacement operation when the MAC address or the MAC address+VLAN ID information is found to overlap that of the other ports; this table, of course, can share one table with other tables, e.g. MAC address learning table. When this method is used, it is recommended to implement simultaneously an ARP request of a function response upper-level device of an ARP agent in order to assure correct ARP response.

### Example 1

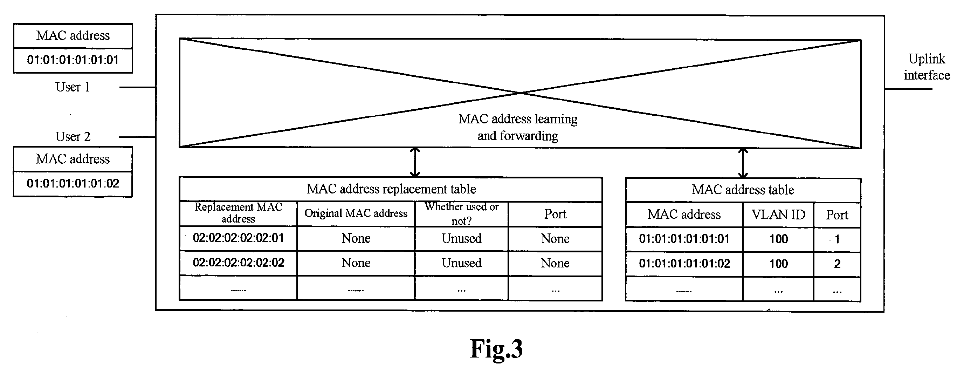

Fig. 3 is a schematic view of an MAC address table and an MAC address replacement table when the MAC address is not duplicate on a user side in a method for providing service to users with duplicate MAC address according to Example 1. As shown in Fig. 3, when the MAC address is not duplicate on the user side, there are two users, user 1 and user 2, whose MAC addresses are 01:01:01:01:01:01 and 01:01:01:01:01:02, respectively, both within VLAN 100 when the MAC address is not duplicate in the MAC address table and the MAC address replacement table. At this moment, the MAC addresses and VLAN IDs of the two ports have been learned in the MAC address table, while a user with duplicate MAC address has yet not been found in the MAC address replacement table, all the replacement entries therein therefore are in an unused state.

When a user 3 comes to be on line, its MAC address is 01:01:01:01:01:02 It can be seen in the VLAN 100 that the MAC address+VLAN ID information of the user 3 duplicates that of the user 2. The service data flow of both user 2 and user 3 will be affected if such situation is not dealt with

### Example 2

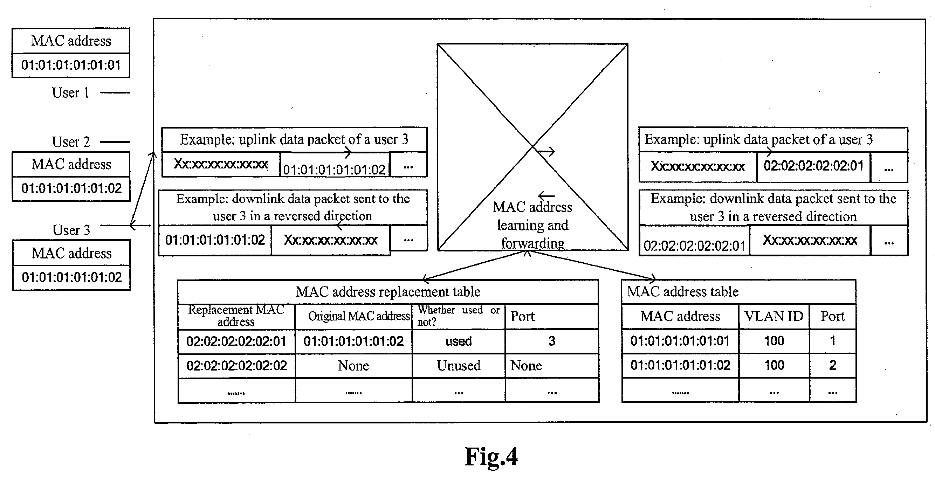

Fig. 4 is a schematic view of an MAC address table and an MAC address replacement table when an MAC address is duplicate on a user side in a method for providing service for users with duplicate MAC address according to Example 2. As shown in Fig. 4, as the MAC address of a user 2 has been learned in an MAC address learning table, the MAC address of a user 3 is not learned in the MAC address learning table, otherwise, an address learning entry of the user 2 will be washed out. An MAC address learning and forwarding module firstly checks whether an MAC address replacement operation has been carried out for the MAC address 01:01:01:01:01:02 of the user 3 in an MAC address replacement table. If it is found not, an unused replacement entry 02:02:02:02:02:0 will be selected to carry out an MAC address replacement, and information of the user 3, such as a source MAC address O 1:O 1:O1:O 1:O 1:02 and user port, will be correspondingly recorded, and this replacement entry will be marked to be in a used state. A source MAC address replacement operation is carried out for this uplink Ethernet data frame, the source MAC address of the data frame after the replacement becomes 02:02:02:02:02:01, then a processing and forwarding operation of next step is carried out according to the MAC address 02:02:02:02:02:01, and finally, the Ethernet data frame is sent to an uplink interface.

In a reversed direction, when a data frame having a target MAC address 02:02:02:02:02:01 in the uplink interface is sent to the MAC address learning and forwarding module, the MAC address replacement table is firstly checked whether a replacement entry of this MAC address exists. A port 3 is found to be corresponding thereto, and then the target MAC address of this data is replaced with 01:01:01:01:01:02 and is sent to user port 3. At this time, if a data frame having the target MAC address 01:01:01:01:01:02 is sent to the MAC address learning and forwarding module, as related replacement entry cannot be found in the replacement entry in the MAC address replacement table, the MAC address table will be searched, and the MAC address of user port 2 is found to be matched therewith, then, this data frame will be sent to the port 2.

Moreover, if the user port 3 does not have the data frame sent in a period of time, the used replacement entry 02:02:02:02:02:01 will be dynamically deleted, and the state shown in Fig. 3 will be returned back to in order to prevent the MAC address replacement table from being occupied by the replacement entries that are not used.

### Apparatus Example

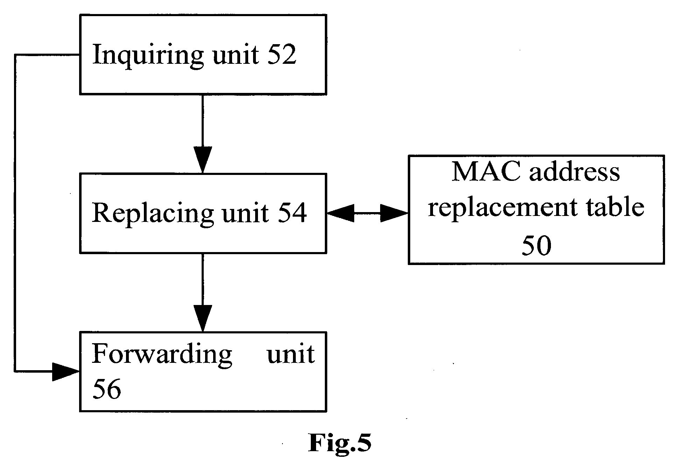

The apparatus in an example of the present invention will be illustrated in detail in conjunction with Fig. 5.

Fig. 5 is a schematic view of a structure of an apparatus for providing service for users with duplicate MAC address according to an example of the present invention. As shown in Fig. 5, the schematic view of the structure of the apparatus for providing service for users with duplicate MAC address according to the example of the present invention specifically may include: an MAC address replacement table 50, an inquiring unit 52, a replacing unit 54, a forwarding unit 56 and an aging unit 58 (not shown in the figure). The units will be described in detail hereinafter.

The MAC address replacement table 50 is provided in an MAC address learning and forwarding module. This MAC address replacement table may belong to a global attribute of a system switching module and is shared by global ports. One MAC address replacement table also can be set in advance for each port for carrying out an MAC address replacement operation when an MAC address or the MAC address+VLAN ID information is found to overlap that of other ports. This table also can share one table with other tables (such as MAC address learning table)

The inquiring unit 52 searches whether an MAC address learning entry or the MAC address+VLAN ID learning entry having an address the same as a source MAC address exists in the MAC address learning table according to the source MAC address of an Ethernet data frame received from a user port, if yes, the replacing unit 54 checks whether a replacement operation is carried out for this source MAC address in the MAC address replacement table; if not, when the MAC address learning entry or the MAC address+VLAN ID learning entry of other user ports is found not to duplicate the source MAC address of the newly received data frame in the MAD address table, the source MAC address will be normally learned, and the forwarding unit 56 forwards the Ethernet data frame according to the source MAC address

The replacing unit 54 checks whether the replacement operation is carried out for the source MAC address in the MAC address replacement table 50, if the replacement operation is not completed, an unused replacement entry will be selected from the MAC address replacement table 50 to replace the source MAC address, the source MAC address before the replacement will be recorded, and this entry will be marked as used.

In a reversed direction, when the target MAC address carried in one Ethernet data frame is a replacement MAC address in a used replacement entry in the MAC address replacement table 50, the replacing unit 54 will replace the target MAC of the Ethernet data frame with a real MAC address corresponding to the replacement MAC address, then, the forwarding unit 56 forwards the Ethernet data frame according to the real MAC address.

When the Ethernet data frame associated with a certain used replacement entry in the MAC address replacement table 50 is not transmitted in a certain period of time, the aging unit 58 will age and delete the replacement entry, and marks the used as unused to prevent the MAC address replacement table from being occupied by entries that are not used.

To sum up, a method and an apparatus for providing service for users with duplicate MAC address are provided in the examples of the present invention. With such method and apparatus, the broadband access service still can be normally provided for users when two or more users in one VLAN have the same MAC.

Above description is only to illustrate the preferred exemplary examples of the present invention but not to limit the scopes of protection of the present invention. Changes or alterations, within the technical scope disclosed by the present invention, that easily occur to the person skilled in the art should be covered in the scope of protection of the present invention. Therefore, the scope of protection of the present invention should be based on the scope of protection of the Claims.

## Claims

1. A method for providing service for users with duplicate MAC address, **characterized, by** comprising:
setting a MAC address replacement table which provides a replacement entry that is used to replace the source MAC. address of an Ethernet data frame received from a user port when different users have the same source MAC address;
step A: searching (S101) whether an MAC address learning entry having an MAC address the same as a source MAC address exists in an MAC address table according to the source MAC address of an Ethernet data frame received from a user port, if yes, implementing step B, otherwise, carrying out MAC address learning and forwarding the Ethernet data frame;
step B: checking (S103) whether the source MAC address has been replaced by a replacement entry in the MAC address replacement table, if the source MAC address has not been replaced, selecting an unused replacement entry in the MAC address replacement table to replace the source MAC address and implementing step C; otherwise, directly implementing the step C; and
Step C: forwarding (S104) the Ethernet data frame according to a replacement MAC. address in the replacement entry.

2. The method according to claim 1, **characterized in that** the method also comprises:
replacing a target MAC of one Ethernet data frame with a real MAC address corresponding to the replacement MAC address when the target MAC address carried in the Ethernet data frame in a reversed direction is the replacement MAC address in a used replacement entry in the MAC address replacement table, and forwarding the Ethernet data frame according to the real MAC address after replacement.

3. The method according to claim 1 or 2, **characterized in that** the method also comprises:
when a data frame associated with a used replacement entry in the MAC address replacement table is not transmitted in a certain period of time, aging and deleting the used replacement entry.

4. The method according to claim 1 or 2, wherein the MAC address replacement table belongs to a global attribute of a system switching module and shared by global ports; or, the MAC address replacement table is set for each port.

5. The method according to claim 1 or 2, **characterized in that** the learning entry comprises:
the MAC address learning entry or a learning entry consisting of the MAC address and a Virtual Local Area Network ID.

6. An apparatus providing service for users with duplicate MAC address, **characterized by** comprising: an MAC address replacement table, an inquiring unit (52), a replacing unit (54) and a forwarding unit (56), wherein
the MAC address replacement table is configured to provide a replacement entry that is used to replace a source MAC address of an Ethernet data frame received from a user port when different users have the same MAC address;
the inquiring unit (52) is configured to search whether an MAC learning entry having an MAC address the same as the source MAC address exists in an MAC address learning table according to the source MAC address of an Ethernet data frame received from a user port, if yes, to trigger and search for the replacing unit (54), otherwise, to carry out MAC learning and trigger the forwarding unit (56);
the replacing unit (54) is configured to check whether the source MAC address has been replaced by a replacement entry in the MAC address replacement table, if the source MAC address has not been replaced, to select an unused replacement entry in the MAC address replacement table to replace the source MAC address and to trigger the forwarding unit (56); otherwise, to directly trigger the forwarding unit (56); and
the forwarding unit (56) is configured to, when triggered by the inquiring unit (52), forward the Ethernet data frame according to the source MAC address; and, when triggered by the replacing unit (54), forward the Ethernet data frame according to the replacement MAC address in the replacement entry.

7. The apparatus according to claim 6, **characterized in that** when a target MAC address carried in one Ethernet data frame in a reversed direction is the replacement MAC address in one used entry in the MAC address replacement table, the replacing unit (54) is also configure to replace the target MAC of the Ethernet data frame with a real MAC address corresponding to the replacement MAC address, and then to trigger the forwarding unit (56); and
the forwarding unit (56) forwards the Ethernet data frame according to the real MAC address.

8. The apparatus according to claim 6 or 7, **characterized in that** the apparatus also comprises:
an aging unit, when an Ethernet data frame associated with a certain used replacement entry in the MAC address replacement table is not transmitted in a certain period of time, the aging unit being configured to age and delete the replacement entry.

## Patentansprüche

1. Verfahren zum Bereitstellen eines Dienstes für Benutzer mit duplizierten MAC-Adressen, **dadurch gekennzeichnet, dass** es umfasst:
Festlegen einer MAC-Adressen-Ersatztabelle, die einen Ersatzeintrag bereitstellt, der verwendet wird, um die Quell-MAC-Adresse eines Ethernet-Datenrahmens zu ersetzen, der von einer Benutzerschnittstelle empfangen wird, wenn verschiedene Benutzer die gleiche Quell-MAC-Adresse haben;
Schritt A: Durchsuchen (S101), ob ein MAC-Adressen-Lerneintrag mit einer MAC-Adresse, die gemäß der Quell-MAC-Adresse eines Ethernet-Datenrahmens, der von einer Benutzerschnittstelle empfangen wurde, gleich wie eine Quell-MAC-Adresse ist, in einer MAC-Adresstabelle existiert, falls ja, Implementieren von Schritt B, anderenfalls Ausführen eines MAC-Adressen-Lernens und Weiterleiten des Ethernet-Datenrahmens;
Schritt B: Prüfen (S103), ob die Quell-MAC-Adresse durch einen Ersatzeintrag in der MAC-Adressen-Ersatztabelle ersetzt wurde, wenn die Quell-MAC-Adresse nicht ersetzt wurde, Auswählen eines nicht verwendeten Ersatzeintrags in der MAC-Adressen-Ersatztabelle, um die Quell-MAC-Adresse zu ersetzen, und Implementieren des Schritts C; andernfalls direktes Implementieren des Schritts C; und
Schritt C: Weiterleiten (S104) des Ethernet-Datenrahmens gemäß einer Ersatz-MAC-Adresse in dem Ersatzeintrag.

2. Verfahren nach Anspruch 1, **dadurch gekennzeichnet, dass** das Verfahren auch umfasst:
Ersetzen einer Ziel-MAC eines Ethernet-Datenrahmens durch eine echte MAC-Adresse, die der Ersatz-MAC-Adresse entspricht, wenn die Ziel-MAC-Adresse, die in dem Ethernet-Datenrahmen in einer umgekehrten Richtung befördert wird, die Ersatz-MAC-Adresse in einem verwendeten Ersatzeintrag in der MAC-Adressen-Ersatztabelle ist, und Weiterleiten des Ethernet-Datenrahmens gemäß der MAC-Adresse nach dem Ersetzen.

3. Verfahren nach Anspruch 1 oder 2, **dadurch gekennzeichnet, dass** das Verfahren auch umfasst:
wenn ein Datenrahmen, der zu einem verwendeten Ersatzeintrag in der MAC-Adressen-Ersatztabelle gehört, nicht in einer gewissen Zeitspanne übertragen wird, Auslagern und Löschen des verwendeten Ersatzeintrags.

4. Verfahren nach Anspruch 1 oder 2, wobei die MAC-Adressen-Ersatztabelle zu einem globalen Attribut eines Systemvermittlungsmoduls gehört und von globalen Schnittstellen gemeinsam genutzt wird; oder wobei die MAC-Adressen-Ersatztabelle für jede Schnittstelle festgelegt ist.

5. Verfahren nach Anspruch 1 oder 2, **dadurch gekennzeichnet, dass** der Lerneintrag umfasst:
den MAC-Adress-Lerneintrag oder einen Lerneintrag, der aus der MAC-Adresse und einer virtuellen lokalen Netzwerk-ID besteht.

6. Vorrichtung, die einen Dienst für Benutzer mit duplizierten MAC-Adressen bereitstellt, **dadurch gekennzeichnet, dass** sie umfasst: eine MAC-Adressen-Ersatztabelle, eine Abfrageeinheit (52) eine Ersatzeinheit (54) und eine Weiterleitungseinheit (56), wobei
die MAC-Adressen-Ersatztabelle konfiguriert ist, um einen Ersatzeintrag bereitzustellen, der verwendet wird, um die Quell-MAC-Adresse eines Ethernet-Datenrahmens zu ersetzen, der von einer Benutzerschnittstelle empfangen wird, wenn verschiedene Benutzer die gleiche Quell-MAC-Adresse haben;
die Abfrageeinheit (52) konfiguriert ist, um danach zu durchsuchen, ob ein MAC-Adressen-Lerneintrag mit einer MAC-Adresse, die gemäß der Quell-MAC-Adresse eines Ethernet-Datenrahmens, der von einer Benutzerschnittstelle empfangen wurde, gleich wie die Quell-MAC-Adresse ist, in einer MAC-Adresstabelle existiert, falls ja, die Ersatzeinheit (54) auszulösen und zu durchsuchen, anderenfalls das MAC-Lernen auszuführen und die Weiterleitungseinheit (56) auszulösen;
die Ersatzeinheit (54) konfiguriert ist, um zu prüfen, ob die Quell-MAC-Adresse durch einen Ersatzeintrag in der MAC-Adressen-Ersatztabelle ersetzt wurde, wenn die Quell-MAC-Adresse nicht ersetzt wurde, einen nicht verwendeten Ersatzeintrag in der MAC-Adressen-Ersatztabelle auszuwählen, um die Quell-MAC-Adresse zu ersetzen, und die Weiterleitungseinheit (56) auszulösen, andernfalls die Weiterleitungseinheit (56) direkt auszulösen; und
die Weiterleitungseinheit (56) konfiguriert ist, wenn sie von der Abfrageeinheit (52) ausgelöst wird, den Ethernet-Datenrahmen gemäß der Quell-MAC-Adresse weiterzuleiten; und wenn sie von der Ersatzeinheit (54) ausgelöst wird, den Ethernet-Datenrahmen gemäß der Ersatz-MAC-Adresse in dem Ersatzeintrag weiterzuleiten.

7. Vorrichtung nach Anspruch 6, **dadurch gekennzeichnet, dass** die Ersatzeinheit (54), wenn eine Ziel-MAC-Adresse, die in einem Ethernet-Datenrahmen in einer umgekehrten Richtung befördert wird, die Ersatz-MAC-Adresse in einem verwendeten Eintrag in der MAC-Adressen-Ersatztabelle ist, auch konfiguriert ist, um die Ziel-MAC-Adresse des Ethernet-Datenrahmens durch eine echte MAC-Adresse zu ersetzen, die der Ersatz-MAC-Adresse entspricht, und dann die Weiterleitungseinheit (56) auszulösen; und
die Weiterleitungseinheit (56) den Ethernet-Datenrahmen gemäß der echten MAC-Adresse weiterleitet.

8. Vorrichtung nach Anspruch 6 oder 7, **dadurch gekennzeichnet, dass** die Vorrichtung auch umfasst: eine Verlagerungseinheit, wobei die Verlagerungseinheit konfiguriert ist, um, wenn ein Ethernet-Datenrahmen, der zu einem gewissen verwendeten Ersatzeintrag in der MAC-Adressen-Ersatztabelle gehört, nicht in einer gewissen Zeitspanne übertragen wird, den Ersatzeintrag zu verlagern und zu löschen.

## Revendications

1. Procédé pour fournir un service à des utilisateurs avec une adresse MAC dupliquée, **caractérisé en ce qu'**il comprend :
l'établissement d'une table de remplacement d'adresse MAC qui fournit une entrée de remplacement qui est utilisée pour remplacer l'adresse MAC source d'une trame de données Ethernet reçue en provenance d'un port d'utilisateur lorsque différents utilisateurs ont la même adresse MAC source ;
étape A : rechercher (S101) si une entrée d'apprentissage d'adresse MAC ayant une adresse MAC qui est la même qu'une adresse MAC source existe dans une table d'adresse MAC selon l'adresse MAC source d'une trame de données Ethernet reçue en provenance d'un port d'utilisateur, si oui, mettre en oeuvre l'étape B, sinon, effectuer un apprentissage d'adresse MAC et transférer la trame de données Ethernet ;
étape B : vérifier (S103) si l'adresse MAC source a été remplacée par une entrée de remplacement dans la table de remplacement d'adresse MAC, si l'adresse MAC source n'a pas été remplacée, sélectionner une entrée de remplacement inutilisée dans la table de remplacement d'adresse MAC pour remplacer l'adresse MAC source et mettre en oeuvre l'étape C ; sinon, mettre en oeuvre directement l'étape C ; et
étape C : transférer (S104) la trame de données Ethernet selon une adresse MAC de remplacement dans l'entrée de remplacement.

2. Procédé selon la revendication 1, **caractérisé en ce que** le procédé comprend également :
le remplacement d'une adresse MAC cible d'une trame de données Ethernet par une adresse MAC réelle correspondant à l'adresse MAC de remplacement lorsque l'adresse MAC cible acheminée dans la trame de données Ethernet dans une direction inverse est l'adresse MAC de remplacement dans une entrée de remplacement utilisée dans la table de remplacement d'adresse MAC, et le transfert de la trame de données Ethernet selon l'adresse MAC réelle après le remplacement.

3. Procédé selon la revendication 1 ou 2, **caractérisé en ce que** le procédé comprend également :
lorsqu'une trame de données associée à une entrée de remplacement utilisée dans la table de remplacement d'adresse MAC n'est pas transmise dans une certaine période de temps, le vieillissement et la suppression de l'entrée de remplacement utilisée.

4. Procédé selon la revendication 1 ou 2, dans lequel la table de remplacement d'adresse MAC appartient à un attribut global d'un module de commutation de système et partagée par des ports globaux ; ou, la table de remplacement d'adresse MAC est établie pour chaque port.

5. Procédé selon la revendication 1 ou 2, **caractérisé en ce que** l'entrée d'apprentissage comprend : l'entrée d'apprentissage d'adresse MAC ou une entrée d'apprentissage se composant de l'adresse MAC et d'un ID de Réseau local virtuel.

6. Appareil fournissant un service à des utilisateurs avec une adresse MAC dupliquée, **caractérisé en ce qu'**il comprend : une table de remplacement d'adresse MAC, une unité d'interrogation (52), une unité de remplacement (54) et une unité de transfert (56), dans lequel
la table de remplacement d'adresse MAC est configurée pour fournir une entrée de remplacement qui est utilisée pour remplacer une adresse MAC source d'une trame de données Ethernet reçue en provenance d'un port d'utilisateur lorsque différents utilisateurs ont la même adresse MAC ;
l'unité d'interrogation (52) est configurée pour rechercher si une entrée d'apprentissage MAC ayant une adresse MAC qui est la même que l'adresse MAC source existe dans une table d'apprentissage d'adresse MAC selon l'adresse MAC source d'une trame de données Ethernet reçue en provenance d'un port d'utilisateur, si oui, déclencher et rechercher l'unité de remplacement (54), sinon, effectuer un apprentissage MAC et déclencher l'unité de transfert (56) ;
l'unité de remplacement (54) est configurée pour vérifier si l'adresse MAC source a été remplacée par une entrée de remplacement dans la table de remplacement d'adresse MAC, si l'adresse MAC source n'a pas été remplacée, sélectionner une entrée de remplacement inutilisée dans la table de remplacement d'adresse MAC pour remplacer l'adresse MAC source et déclencher l'unité de transfert (56) ; sinon, déclencher directement l'unité de transfert (56) ; et
l'unité de transfert (56) est configurée pour, lorsque déclenchée par l'unité d'interrogation (52), transférer la trame de données Ethernet selon l'adresse MAC source ; et, lorsque déclenchée par l'unité de remplacement (54), transférer la trame de données Ethernet selon l'adresse MAC de remplacement dans l'entrée de remplacement.

7. Appareil selon la revendication 6, **caractérisé en ce que** lorsqu'une adresse MAC cible acheminée dans une trame de données Ethernet dans une direction inverse est l'adresse MAC de remplacement dans une entrée utilisée dans la table de remplacement d'adresse MAC, l'unité de remplacement (54) est également configurée pour remplacer l'adresse MAC cible de la trame de données Ethernet par une adresse MAC réelle correspondant à l'adresse MAC de remplacement, et ensuite pour déclencher l'unité de transfert (56) ; et
l'unité de transfert (56) transfère la trame de données Ethernet selon l'adresse MAC réelle.

8. Appareil selon la revendication 6 ou 7, **caractérisé en ce que** l'appareil comprend également : une unité de vieillissement, lorsqu'une trame de données Ethernet associée à une certaine entrée de remplacement utilisée dans la table de remplacement d'adresse MAC n'est pas transmise dans une certaine période de temps, l'unité de vieillissement étant configurée pour vieillir et supprimer l'entrée de remplacement.
